# EUROPEAN PATENT APPLICATION

(11) **EP 2 253 763 A1**
(43) Date of publication of application: **24.11.2010**
(21) Application number: 10162093.8
(22) Date of filing: 06.05.2010
(51) Int. Cl.: E02F 9/16, E02F 9/22, E02F 9/12, E02F 9/08

(54) **Construction machine**

(30) Priority: 12.05.2009 JP 2009115155
(71) Applicant: Kobelco Construction Machinery Co., Ltd., Hiroshima-shi, Hiroshima 731-0138 (JP)
(72) Inventor: Miyachi, Isao, Hiroshima-shi Hiroshima 731-0138 (JP); Fujii, Atsuo, Hiroshima-shi Hiroshima 731-0138 (JP); Kurushima, Satoshi, Hiroshima-shi Hiroshima 731-0138 (JP)
(74) Representative: TBK-Patent

(57) **Abstract**

A driver's seat (35) and a console box (36) are juxtaposed on a hood (32) that opens and closes an engine room provided in the rear of an upper frame (30). The driver's seat (35) and the console box (36) turn together with the hood (32). With this structure, operability of a control lever is improved at the driver's seat (35), a configuration is simplified by adopting only one turn mechanism for the hood (32), maintenance is facilitated by enlarging a maintenance opening, and design flexibility is increased.

## Description

### BACKGROUND OF THE INVENTION

### 1. Field of the Invention

The present invention relates to a construction machine, such as a hydraulic shovel, in which an engine room is covered with a hood and a driver's seat is provided on the hood.

### 2. Description of the Related Art

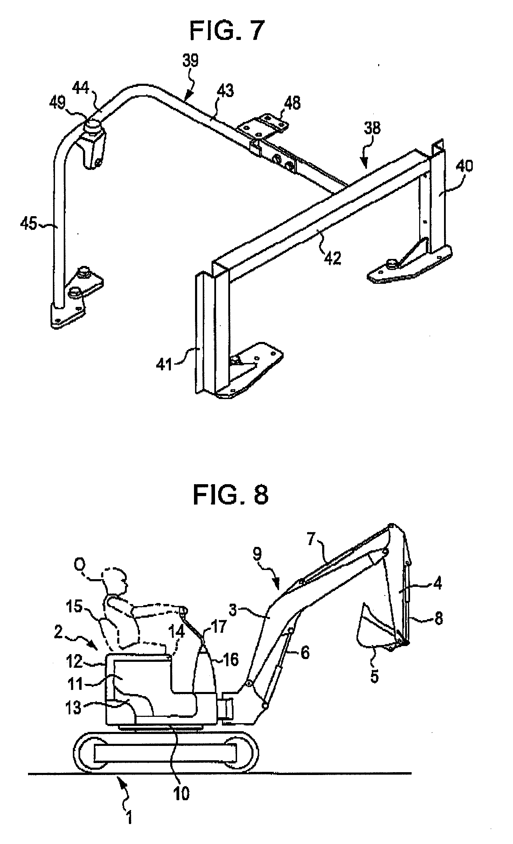

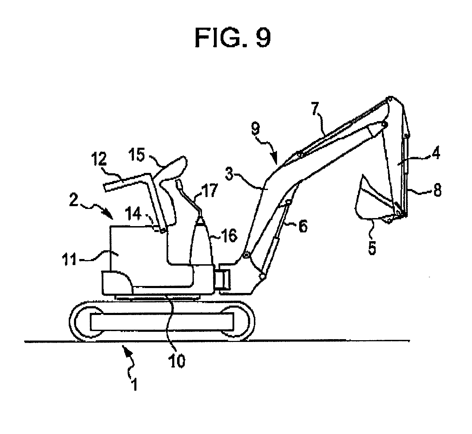

In a small-sized shovel disclosed in Japanese Unexamined Patent Application Publication No. 2004-137884 (hereinafter referred to as Related Art 1), an upper rotating body 2 is rotatably mounted on a lower traveling body 1 of a crawler type, and a working attachment 9 is attached to the upper rotating body 2, as shown in Figs. 8 and 9. The working attachment 9 includes a boom 3, an arm 4, a bucket 5, and hydraulic cylinders (a boom cylinder, an arm cylinder, and a bucket cylinder) 6 to 8 for driving the boom 3, the arm 4, and the bucket 5.

An engine room 13 is provided in the rear of an upper frame 10 that constitutes the upper rotating body 2, and is surrounded by right and left side panels (only one of the side panels is shown) 11, a hood 12, etc. The engine room 13 stores equipment including an engine (not shown).

The hood 12 is L-shaped in side view, and covers an upper side and a rear side of the engine room 13. The hood 12 is attached to the upper frame 10 in a manner such as to turn on a hood shaft (hinge) 14 provided at a front end thereof in order to open and close upper and rear openings of the engine room 13.

Fig. 8 illustrates a state in which the hood 12 is closed, and Fig. 9 illustrates a state in which the hood 12 is open. In the open state of the hood 12, maintenance of the equipment is performed.

A driver's seat 15 is provided on the hood 12. An operator O operates a control lever 17 of a console box 16 provided on a floor in front of the driver's seat 15 while sitting on the driver's seat 15.

The console box 16 stores the control lever 17, a remote control valve (hydraulic equipment) to be operated by the control lever 17, and electric equipment (not shown) such as switches and a monitor panel.

Japanese Unexamined Patent Application Publication No. 2001-107394 (hereinafter referred to as Related Art 2) discloses another configuration, in which a console box and a hood are arranged beside a driver's seat and the console box is turned separately from the hood so as to open a part of an upper opening of an engine room so that maintenance of a specific device in the engine room can be performed through the open part.

When only the driver's seat 15 is provided on the hood 12, as in Related Art 1 shown in Figs. 8 and 9, the console box 16 needs to be provided at the position on the front floor at a distance from the driver's seat 15, and this reduces operability of the control lever 17.

In contrast, when the hood and the console box that are juxtaposed are separately turned as in Related Art 2, there are the following disadvantages:
(I) Since it is necessary to provide two mechanisms for turning the hood and the console box, the structure is complicated and the cost increases.
(II) The aperture area (maintenance opening) is reduced by the presence of the console box in a state in which the hood is open, and this is disadvantageous in maintenance.
(III) Since there is a restriction that the driver's seat and the console box should not interfere with each other during their turns, the flexibility in designing the driver's seat and the console box are reduced.

### SUMMARY OF THE INVENTION

An object of the present invention is to provide a construction machine that allows a control lever to be operated at a driver's seat with high operability, that simplifies a configuration by adopting only one turn mechanism for a hood, that facilitates maintenance by enlarging a maintenance opening, and that increases design flexibility.

A construction machine according to an aspect of the present invention includes a lower traveling body; an upper rotating body mounted on the lower traveling body; an engine room provided in the rear of an upper frame of the upper rotating body and having an upper opening and a rear opening; a hood including an upper face portion configured to cover the upper opening and a rear face portion configured to cover the rear opening, the hood turning on a hood shaft at a front end of the upper face portion so as to open and close the upper and rear openings; and a driver's seat and a console box juxtaposed on an upper surface of the upper face portion of the hood in a manner such as to turn together with the hood, the console box having a control lever and hydraulic and electric equipment.

According to the present invention, since the driver's seat and the console box are juxtaposed on the hood in a manner such as to turn together, operability of the control lever of the console box can be improved.

Moreover, since only one turn mechanism for the hood will do, the structure is simplified and the cost is reduced.

In addition, since the maintenance opening can be widely opened by the hood, maintenance is facilitated. Further, since the driver's seat and the console box do not interfere with each other during turning, the flexibility in design can be increased.

### BRIEF DESCRIPTION OF THE DRAWINGS

Fig. 1 is an overall side view of a small-sized shovel according to an embodiment of the present invention;
Fig. 2 is an enlarged and partially cutaway view of a part of an-upper rotating body in the shovel;
Fig. 3 is a side view illustrating a state in which a hood is opened from a state shown in Fig. 2;
Fig. 4 is a perspective view illustrating the state shown in Fig. 3;
Fig. 5 is an enlarged partial view of the part shown in Fig. 2;
Fig. 6 is an enlarged sectional view taken along line VI-VI in Fig. 5;
Fig. 7 is a perspective view of a hood support device;
Fig. 8 is a schematic side view of a small-sized shovel of the related art; and
Fig. 9 is a view equivalent to Fig. 8, illustrating a state in which a hood is open.

### DESCRIPTION OF THE PREFERRED EMBODIMENTS

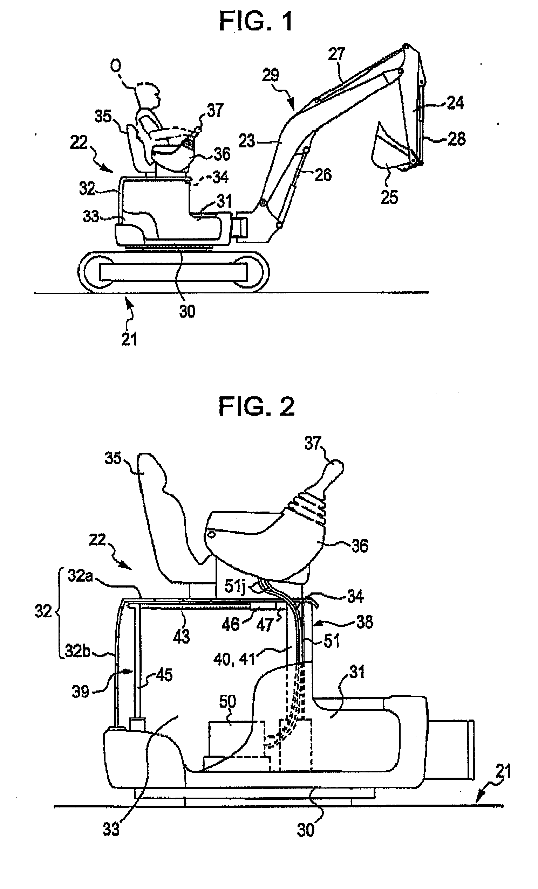

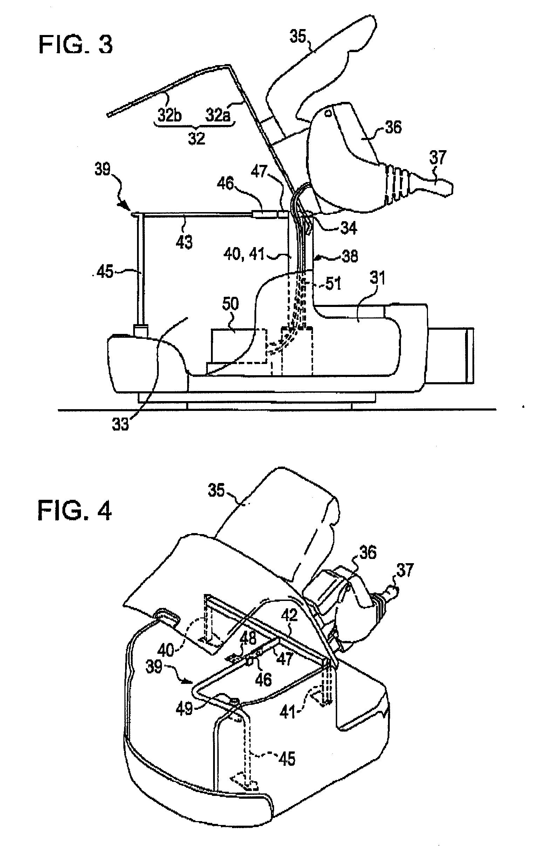

An embodiment of the present invention will be described with reference to Figs. 1 to 6.

In the embodiment, the present invention is applied to a small-sized shovel in correspondence with the description of the related art.

In the embodiment, the following structures are the same as those adopted in the small-sized shovel of the related art shown in Figs. 8 and 9:
(i) The small-sized shovel includes a lower traveling body 21 of a crawler type, an upper rotating body 22 rotatably mounted on the lower traveling body 21, and a working attachment 29 attached to the upper rotating body 22. The working attachment 29 includes a boom 23, an arm 24, a bucket 25, and hydraulic cylinders (a boom cylinder, an arm cylinder, and a bucket cylinder) 26 to 28 for driving the boom 23, the arm 24, and the bucket 25.
(ii) An engine room 33 is provided in the rear of an upper frame 30 that constitutes the upper rotating body 22. The engine room 33 is surrounded by right and left side panels (only one of them is shown) 31, a hood 32, etc. in a manner such as to have upper and rear openings. The engine room 33 stores equipment including an engine (not shown).
(iii) As shown in detail in Figs. 2 to 4, the hood 32 is L-shaped and includes an upper face portion 32a for covering an upper side of the engine room 33 and a rear face portion 32b for covering a rear side of the engine room 33. The hood 32 is attached to the upper frame 30, and turns on a hood shaft (hinge) 34 at a front end thereof so as to open and close the upper and rear openings of the engine room 33.

In the embodiment, a driver's seat 35 and right and left console boxes 36 (only one of them is shown) are juxtaposed on the hood 32 (upper face portion 32a), and turn together with the hood 32.

The console boxes 36 each incorporate a control lever 37, a remote control valve (hydraulic equipment) to be operated by the control lever 37, and electric equipment (switches and a monitor panel), and are provided on the hood 32 on the right and left sides of the driver's seat 35.

Since the console boxes 36 are provided beside the driver's seat 35 in this way, operability of the control lever 37 is higher than when they are provided on a floor in front of the driver's seat.

Moreover, since only one turn mechanism for the hood 32 will do, the structure is simplified and the cost is low.

Further, a maintenance opening (both the upper and rear openings of the engine room 33) can be widely opened by the hood 32, and this provides a maintenance advantage.

In addition, the problem of interference between the driver's seat 35 and the hood 32 during turning does not occur, unlike the method for separately turning the driver's seat 35 and the hood 32, and therefore, the flexibility in design is increased.

As a hood support device for supporting the hood 32 in a closed state, a hood support frame 38 and a support member 39 are provided in the engine room 33. Fig. 7 is an overall view of the hood support device.

The hood support frame 38 is provided as a gate-shaped frame member defined by right and left columns 40 and 41 and a lateral beam 42 laid between upper ends of the columns 40 and 41. Lower ends of the columns 40 and 41 are attached to a bottom surface of the upper frame 30 directly or via mounting members in a state in which the hood support frame 38 substantially crosses a front end of the engine room 33.

The support member 39 is shaped like a rib formed by bending a pipe, a rod, or a mold material (a circular pipe in Fig. 7), that is, includes a longitudinal side portion 43 longitudinally traversing the widthwise center of the upper opening of the engine room 33, a lateral side portion 44 horizontally extending from a rear end of the longitudinal side portion 43 to the right via a gently rounded corner, and a rear column 45 vertically extending downward from a leading end of the lateral side portion 44. A front end of the longitudinal side portion 43 is connected to a middle portion in the right-left direction of the lateral beam 42 of the hood support frame 38 via connecting fittings 46 and 47, and a lower end of the rear column 45 is attached to the bottom surface of the upper frame 30.

In this way, the hood support device formed by a combination of the hood support frame 38 and the support member 39 is entirely shaped like a letter J inversed in the right-left direction in plan view, and is gate-shaped in side view. A front end of the hood 32 is supported by the hood support frame 38 over most of the width of the hood 32.

Further, almost the widthwise center of the hood 32 is supported by the longitudinal side portion 43 of the support member 39 over the substantially entire length in the front-rear direction, and the rear end of the hood 32 is supported by the lateral side portion 44 and the rear column 45.

To increase the mounting strength of the support member 39, the front end of the longitudinal side portion 43 is attached to a hydraulic tank (not shown) via a mounting seat 48.

Further, to increase the hood support strength, mount members are provided on the right and left sides of the longitudinal side portion 43 of the support member 39, and receive a load from above the hood 32 by contact with a lower surface of the hood 32.

While only a right mount member 49 provided in the lateral side portion 44 of the support member 39, of the mount members, is shown in the figures, a left mount member is provided, for example, in a fuel tank (not shown) on the rear left side of the engine room 33.

A hydraulic hose and an electric wire (generically referred to as hoses) 51 are provided between the engine room 33 and the console boxes 36. The hoses 51 exchange hydraulic pressure and electric power between hydraulic and electric equipment (not shown) provided in the console boxes 36 (a remote control valve as hydraulic equipment and switches and a monitor panel as electric equipment) and hydraulic and electric equipment provided in the engine room 33 (a control valve 50 as hydraulic equipment and a controller and a battery (not shown) as electric equipment).

In this shovel of the embodiment, the right and left console boxes 36 turn together with the hood 32, and therefore, the hoses 51 also turn in conjunction with opening and closing of the hood 32.

Accordingly, the shovel adopts the following structures so that the hoses 51 do not obstruct opening and closing of the hood 32, an undue force does not act on the hoses 51, and a routing structure is not complicated to prevent these problems.

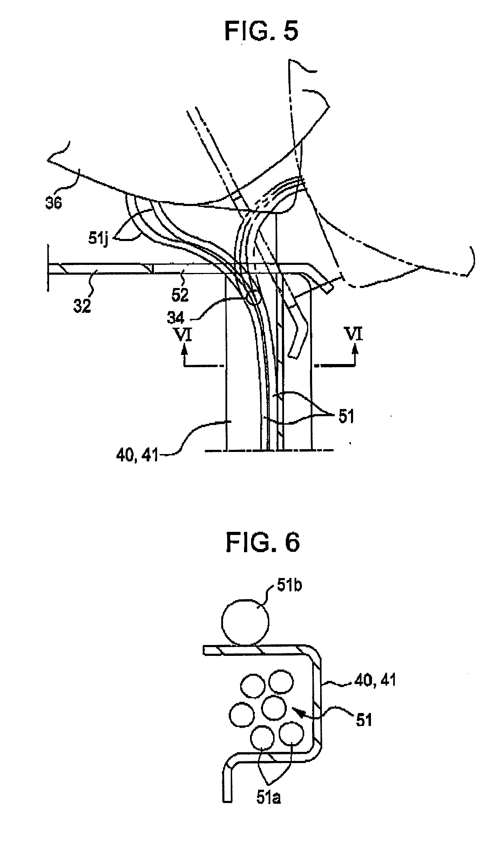

The right and left columns 40 and 41 of the hood support frame 38 are angular U-shaped in section and are open rearward, as shown in Fig. 6, and the hoses 51 are routed along the columns 40 and 41.

More specifically, referring to Fig. 6, hydraulic hoses 51a of the hoses 51 are routed inside and along the columns 40 and 41, and electric wires 51b are routed outside and along the columns 40 and 41. The hoses 51 are connected at lower ends to the equipment in the engine room 33 and at upper ends to the console boxes 36.

The hoses 51 are held by the columns 40 and 41 inside and outside the columns 40 and 41 by, for example, bands (not shown).

Referring to Fig. 5, grommets (not shown) are attached to hose takeout openings 52 provided at right and left front ends of the hood 32. The hoses 51 are sorted according to the type (hydraulic hoses and electric wire) by the grommets, and are guided to the console boxes 36.

In this case, as shown in Fig. 5 (illustration of the support member 39 is omitted for easy understanding), intermediate portions 51j of the hoses 51 between the engine room 33 and the console boxes 36 are routed along a path such as to pass through or by the axis of the hood shaft 34 in side view and to turn on the hood shaft 34 during opening and closing of the hood 32.

Since this routing structure can minimize the amount of stretch and retraction of the hoses 51 (intermediate portions 51j) due to opening and closing of the hood 32, it is unnecessary to add a mechanism (e.g., a hose reel) for absorbing stretch and retraction or a structure for preventing interference between the hoses 51 and the structures due to stretch and retraction. For this reason, the structure for routing the hoses is simplified, and the hoses 51 will not be damaged by an excessive force.

In other words, it is possible to solve the problems of the hoses 51 caused when the console boxes 36 and the hood 32 are turned together.

In this case, since the hoses 51 are routed along the columns 40 and 41 on both sides of the hood support frame 38 for supporting the front end of the hood 32, they can be easily routed and be protected.

Further, since the columns 40 and 41 also function as hose guide members, a special guide member is unnecessary, and this achieves simplification of the structure and cost reduction.

Further, since the hoses 51 are sorted and guided inside and outside the columns 40 and 41 according to the type (hydraulic hoses and electric wires), the hydraulic hoses 51a and the electric wires 51b can be easily and orderly routed, and this provides a maintenance advantage.

In addition, since the hydraulic hoses 51a and the electric wires 51b are separated, interference therebetween (an adverse effect of an electric spark on the hydraulic hoses and heat conduction between the hydraulic hoses 51a and the electric wires 51b) can be prevented.

### Other Embodiments

(1) While the hoses 51 are separately routed inside and outside the columns according to the type in the above-described embodiment, all of the hoses 51 may be routed inside the columns 40 and 41. In this case, a partition member or a partition wall for separating the hoses 51 may be provided inside the columns 40 and 41.
(2) While both the right and left columns 40 and 41 of the hood support frame 38 also function as the hose guide members in the above-described embodiment, only one of the columns 40 and 41 may function as a hose guide member.
   Alternatively, separately from the columns 40 and 41, special hose guide members may be independently provided along or separately from the columns 40 and 41.
(3) While the present invention is suitably applied to the small-sized shovel, it is also applicable to other construction machines having mechanical configurations similar to the configuration of the small-sized shovel.

Although the invention has been described with reference to the preferred embodiments in the attached figures, it is noted that equivalents may be employed and substitutions may be made herein without departing from the scope of the invention as recited in the claims.

A driver's seat and a console box are juxtaposed on a hood that opens and closes an engine room provided in the rear of an upper frame. The driver's seat and the console box turn together with the hood. With this structure, operability of a control lever is improved at the driver's seat, a configuration is simplified by adopting only one turn mechanism for the hood, maintenance is facilitated by enlarging a maintenance opening, and design flexibility is increased.

## Claims

1. A construction machine comprising:
a lower traveling body;
an upper rotating body mounted on the lower traveling body;
an engine room provided in the rear of an upper frame of the upper rotating body, and having an upper opening and a rear opening;
a hood including an upper face portion configured to cover the upper opening and a rear face portion configured to cover the rear opening, the hood turning on a hood shaft provided at a front end of the upper face portion so as to open and close the upper opening and the rear opening; and
a driver's seat and a console box juxtaposed on an upper surface of the upper face portion of the hood in a manner such as to turn together with the hood, the console box having a control lever and hydraulic and electric equipment.

2. The construction machine according to Claim 1, further comprising:
hoses configured to exchange hydraulic pressure and electric power between hydraulic and electric equipment provided in the console box and hydraulic and electric equipment provided in the engine room, the hoses including intermediate portions that extend from the engine room to the console box and that are routed along a path such as to turn on the hood shaft near the hood shaft when the hood turns.

3. The construction machine according to Claim 2, further comprising:
a hose guide member configured to route and guide the hoses and provided in the engine room.

4. The construction machine according to Claim 3, further comprising:
a hood support frame configured to support a front end of the hood in a state in which the hood is closed, and provided at a front end of the engine room,
wherein the hood support frame includes columns having an angular U-shaped cross section and provided on both right and left sides of the hood support frame, and the hoses are routed using at least one of the columns as the hose guide member.

5. The construction machine according to Claim 4,
wherein the hoses are separately routed inside and outside the at least one of the columns of the hood support frame according to types of the hoses.
